# EUROPÄISCHE PATENTSCHRIFT

(11) **EP 1 060 655 B1**
(45) Veröffentlichungstag und Bekanntmachung des Hinweises auf die Patenterteilung: **03.11.2004**
(21) Anmeldenummer: 99118130.6
(22) Anmeldetag: 11.09.1999
(51) Int. Cl.: A01G 9/00

(54) **Pflanzenzuchtvorrichtung**
Cultivation device for plants
Dispositif pour cultiver des plantes

(30) Priorität: 18.06.1999 DE 19927855; 21.07.1999 DE 19934309
(43) Veröffentlichungstag der Anmeldung: 20.12.2000
(73) Patentinhaber: L & L Probox GmbH, 89617 Untermarchtal (DE)
(72) Erfinder:
(74) Vertreter: Kiessling, Christian

(56) Entgegenhaltungen:
- DE-A- 3 446 677
- DE-A- 4 431 436
- DE-A- 19 719 347
- FR-A- 2 648 011
- GB-A- 1 010 941
- US-A- 3 800 471
- US-A- 3 903 641

## Beschreibung

Die Erfindung betrifft eine Vorrichtung zum Anordnen von Pflanzen, mit einem Schalenelement zur Aufnahme der Pflanzen sowie einer das Wurzelwerk der Pflanzen haltenden Substanz, wobei das Schalenelement eine wasserdurchlässige innere Rahmeneinrichtung enthält, oberhalb derer die das Wurzelwerk der Pflanzen haltende Substanz vorgesehen ist, und unterhalb derer ein ein Wasserreservoir bildender Freiraum zur Aufnahme von Wasser vorgesehen ist.

Vorrichtungen der eingangs genannten Art sind im Stand der Technik beispielsweise als Blumenkästen bekannt. Derartige Vorrichtungen weisen zum einen den Nachteil auf, daß eine oder mehr Pflanzen nicht nacheinander an beliebigen Stellen innerhalb der Schalenelements anordbar ist und zum anderen, daß ein regelmäßiges Wässern von Hand der Pflanzen notwendig ist.

Aus DE 44 31 436 A1 ist eine Vorrichtung zur Pflanzenpflege bekannt, bei der eine Pflanze in einem Blumentopf wächst, der mindestens eine Öffnung aufweist, und beide der der Blumentopf in einem Gehäuse steckt, das in einem Wasserbehälter steht, dessen Wasserspiegel unterhalb des Bodens des Blumentopfes liegt. Diese bekannte Vorrichtung weist eine Trennwand zwischen zwei Behälterteilen auf, durch die das Wurzelwerk der in dem oberen Behälterteil vorgesehenen Pflanzen zwecks Bewässerung in dem unteren Behälterteil geführt ist.

Aus US 3,903,641 ist eine Pflanzenhalterungs-Vorrichtung bekannt, die ein langgestrecktes Paneel mit einem Bepflanzungsareal zur Aufnahme von Erde und Pflanzen enthält. Diese bekannte Vorrichtung ist darüber hinaus mit einem Gewicht versehen, das an einem Ende in dem Paneel positioniert ist, und das im Zusammenspiel mit einem als Drehpunkt wirkenden Vorsprung ein Kippen des Paneels um einen vorgegebenen Winkel bewirkt, wenn der Wassergehalt der Erde und damit deren Gewicht einen vorherbestimmten Betrag unterschreitet.

Aus US 3,800,471 ist ein Blumentopf mit wasserdichtem Boden bekannt, dessen Seitenwände bei einer vorgegebenen Höhe mit einer Mehrzahl von ersten Löchern versehen sind. Im Bereich des Bodens ist dabei eine Reservoireinrichtung mit einem Hohlraum zur Aufnahme von Wasser und einer Mehrzahl von zweiten Löchern zum Herstellen einer Wasserkommunikationsverbindung von in dem Blumentopf gespeicherter, die Reservoireinrichtung umgebender Erde mit dem Hohlraum vorgesehen, so dass Wasser über die ersten und zweiten Löcher in den Hohlraum gelangen kann, um die Erde in vorherbestimmbarer Intensität zu befeuchten.

Aufgabe der Erfindung ist es, eine Vorrichtung zum Anordnen von Pflanzen zu schaffen, bei der eine automatische Bewässerung, vorzugsweise unter Nutzung von Regenwasser, der in der Vorrichtung angeordneten Pflanzen gegeben ist und bei der eine oder mehr Pflanzen zeitlich hintereinander an beliebige Stellen innerhalb der Vorrichtung plazierbar ist.

Für eine Vorrichtung der eingangs genannten Art wird diese Aufgabe dadurch gelöst, dass eine Kommunikationsverbindung zwischen dem Reservoir und der Substanz vorgesehen ist wobei eine oder mehr Wasserableiteinrichtung vorgesehen sind, mittels derer überschüssiges Wasser aus dem ein Wasserreservoir bildenden Freiraum ableitbar ist, und die Rahmeneinrichtung auf einem innerhalb des Schalelements ausgebildeten Absatz gelagert ist, wobei die eine oder mehr Wasserableiteinrichtung für überschüssiges Wasser aus dem ein Wasserreservoir bildenden Freiraum durch den Absatz geführt ist.

Bevorzugte Ausführungsformen der Erfindung sind Gegenstand der Unteransprüche.

Bei der erfindungsgemäßen Vorrichtung zum Anordnen von Pflanzen wird durch die Merkmalskombination, daß eine Kommunikationsverbindung zwischen dem Reservoir und der Substanz vorgesehen ist, wobei eine oder mehr Wasserableiteinrichtung vorgesehen sind, mittels derer überschüssiges Wasser aus dem ein Wasserreservoir bildenden Freiraum ableitbar ist, und die Rahmeneinrichtung auf einem innerhalb des Schalelements ausgebildeten Absatz gelagert ist, wobei die eine oder mehr Wasserableiteinrichtung für überschüssiges Wasser aus dem ein Wasserreservoir bildenden Freiraum durch den Absatz geführt ist erreicht, dass die das Wurzelwerk der Pflanzen haltende Substanz über die Kommunikationsverbindung über die Zeit konstant mit Wasser aus dem Reservoir versorgt wird, so daß ein Wässern der Pflanzen von Hand entbehrlich ist.

Des weiteren ist bei der erfindungsgemäße Vorrichtung durch die Platzierbarkeit der Pflanzen einzeln oder in zusammengesetzten Einheiten oberhalb der Rahmeneinrichtung sichergestellt, dass die Pflanzen innerhalb des Schalenelements leicht von einer Stelle zu einer anderen bringbar sind bzw. neue einzelne Pflanzen oder Pflanzengruppen leicht in die erfindungsgemäße Vorrichtung einbringbar sind. Bei der erfindungsgemäßen Vorrichtung ist eine Überfüllung des Wasserreservoirs und eine damit verbundene Fäulnis des Wurzelwerkes der Pflanzen sicher verhindert.

Bei der erfindungsgemäßen Vorrichtung ist vorzugsweise vorgesehen, daß eine Kommunikationsverbindung eine oder mehr Wassereinleiteinrichtungen mit einer Öffnung zum Einleiten von Wasser in das Schalenelement enthält, die oberhalb der Rahmeneinrichtung innerhalb der das Wurzelwerk der Pflanzen haltenden Substanz angeordnet sind, und zusätzlich Einrichtungen enthält, die Wasserverbindung zwischen der einen oder mehr Wassereinleiteinrichtungen zu dem einen Reservoir und/oder einem weiteren Reservoir bewirken. Gemäß einfacher Ausführungsformen der erfindungsgemäßen Vorrichtung kann alternativ vorgesehen sein, daß die Kommunikationsverbindung über Schläuche erfolgt, durch die das Wasser beispielsweise über von Hand oder elektrisch betriebene Pumpen gefördert wird. Gemäß einer sehr einfachen Ausführungsform kann das Wasser auch von Hand geschöpft werden.

Die zusätzlichen Einrichtungen können dabei durch Kapillarien gebildet sein, oder sie können alternativ beispielsweise durch Vliesmaterialien oder durch mindestens eine elektrische Pumpe gebildet sein.

Das eine Reservoir der erfindungsgemäßen Vorrichtung enthält vorzugsweise eine Ventileinrichtung zum Ablassen von Wasser. Die Ventileinrichtung kann auch als einfacher Stöpsel in einer entsprechenden Bohrung in dem Boden des Reservoirs ausgebildet sein, über die das Wasser aus dem Reservoir leitbar ist. Auf diese Weise ist ein einfaches Entfernen des Wassers aus der erfindungsgemäßen Vorrichtung beispielsweise für den Transport derselben ermöglicht.

Die erfindungsgemäße Vorrichtung kann aus zwei Modulen zusammengesetzt sein, wobei das eine Modul in das andere Modul schlüssig einsetzbar ist und in eingesetztem Zustand an einer inneren Kante des anderen Moduls abgestützt ist. Dadurch wird erreicht, daß auch bei einer Einbringung dieser Vorrichtung im Erdreich das obere Modul, in dem die Blumen untergebracht sind, beispielsweise zum Zweck der Reinigung oder Unterbringung der Blumen im Winter leicht aus dem anderen Modul herausnehmbar ist.

Das Schalenelement der erfindungsgemäßen Vorrichtung weist vorzugsweise einen äußeren Flansch auf, mittels dessen dieses an einer Halteeinrichtung abstützbar ist. Die Halteeinrichtung kann dabei beispielsweise im Erdreich angeordnet sein. Dadurch ist eine robuste Lagerung der Rahmeneinrichtung in einer äußeren Halteeinrichtung gewährleistet. Darüberhinaus kann auch die Rahmeneinrichtung einen äußeren Flansch aufweisen, mittels dessen sie an dem Schalenelement abstützbar ist.

Die Wasserdurchlässigkeit der inneren Rahmeneinrichtung der erfindungsgemäßen Vorrichtung ist vorzugsweise durch in der Rahmeneinrichtung ausgebildete, in vertikaler Richtung verlaufende Bohrungen erzeugt. Der Durchmesser der Bohrungen ist dabei an die jeweilige Materialbeschaffenheit der das Wurzelwerk der Pflanzen haltenden Substanz anpaßbar. Ist diese Substanz von Erde bzw. Lehm oder Ton gebildet, so ist dieser Durchmesser im Bereich von wenigen Millimetern zu bemessen. Ist die das Wurzelwerk der Pflanzen haltende Substanz von kleinen Steinen oder porösen Keramikkugeln gebildet, so kann der Durchmesser auf etwa 1 cm bemessen sein. Die Wasserdurchlässigkeit der Rahmeneinrichtung kann darüberhinaus durch geeignete permeable Materialien gewährleistet sein.

Gemäß einer besonderen Ausführungsform der erfindungsgemäßen Vorrichtung ist vorgesehen, daß Vaseneinrichtungen für Schnittblumen und oder Aufnahmeeinrichtungen für beliebige Gestaltungselemente in der Rahmeneinrichtung angeordnet sind, wobei die Vasen eine Kommunikationsverbindung mit dem einen Reservoir enthalten. Dadurch ist es ermöglicht, nicht nur Topfpflanzen bzw. mit einem Wurzelwerk versehene Pflanzen in der erfindungsgemäßen Vorrichtung anzuordnen, sondern auch Schnittblumen, wobei die Kommunikationsverbindung zu dem einen Reservoir eine Wässerung von in den entsprechenden Rahmeneinrichtungen angeordneten Schnittblumen gewährleistet.

Die erfindungsgemäße Vorrichtung wird im folgenden anhand einer bevorzugten Ausführungsform erläutert, die in den Figuren der Zeichnung dargestellt ist. Darin zeigen:
- Fig.1: eine bevorzugte Ausführungsform des Schalenelements gemäß dem ersten Aspekt der erfindungsgemäßen Vorrichtung zum Anordnen von Pflanzen, in einer Ansicht von schräg oben;
- Fig.2: das in Fig. 1 dargestellte Schalenelement zusammen mit einer inneren Rahmeneinrichtung, in einer Ansicht von schräg oben;
- Fig.3: das in Fig. 2 dargestellte Schalenelement in einer Querschnittsansicht.

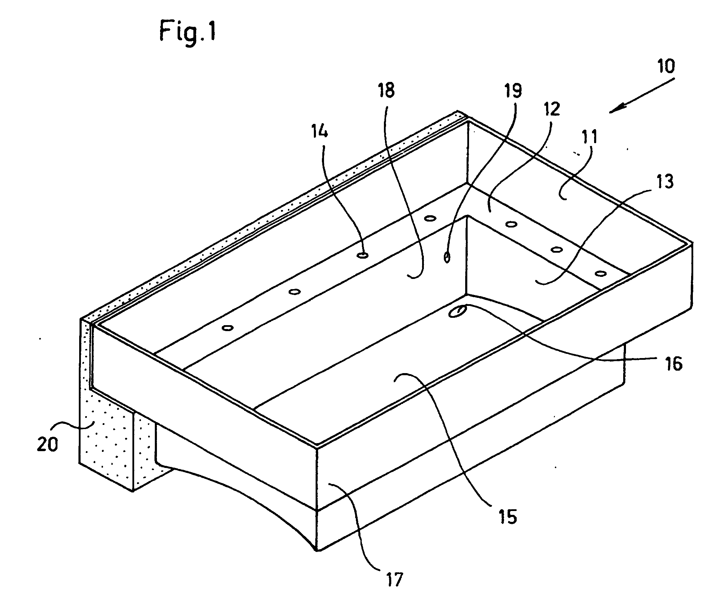

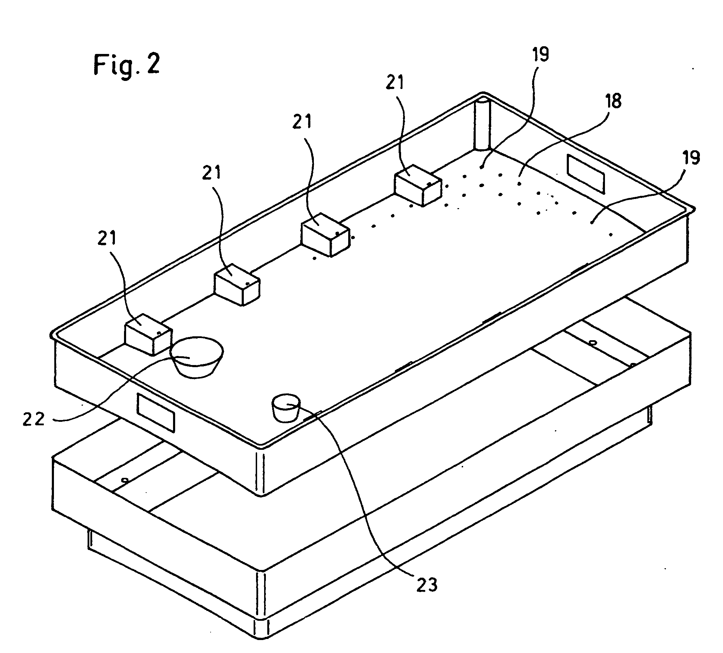

Bei der in den Figuren 1 und 2 dargestellten bevorzugten Ausführungsform der erfindungsgemäßen Vorrichtung 10 zum Anordnen von Pflanzen ist aus zwei Modulen 100,101 zusammengesetzt, wobei das eine Modul 100 in das andere Modul 101 schlüssig eingesetzt ist und dabei an einer inneren Kante des anderen Moduls 101, die als Absatz 12 ausgebildet ist, abgestützt ist. Das Modul 101 ist als einstückiges Schalenelement ausgebildet, wobei der Absatz 12, wie insbesondere aus Fig. 1 ersichtlich ist, mit einer Mehrzahl von Bohrungen 14 versehene ist, die eine Funktion als Wasserableiteinrichtung für überschüssiges Wasser in dem ein Wasserreservoir bildenden inneren Freiraum 13 innehaben. Der Freiraum 13 zur Aufnahme von Wasser weist einen Boden 15 auf, an dessen tiefster Stelle eine Ventileinrichtung 16 zum Ablassen von Wasser vorgesehen ist. Das Schalenelement 101 ist so ausgebildet, daß es eine Wandung 17 enthält, in die das an dem Absatz 12 abgestützte Modul 100 schlüssig eingesetzt ist, wobei das Modul 100 einen nach oben offenen Hohlkörper zur Aufnahme einer eine Mehrzahl von Pflanzen bzw. deren Wurzelwerk aufnehmenden Substanz bildet. Die die Pflanzen bzw. deren Wurzelwerk haltende Substanz, die aus Erde, Kies, oder porösen Keramikkugeln gebildet sein kann, ist aus Gründen der Übersichtlichkeit in den Figuren nicht dargestellt. Es versteht sich jedoch, daß in der erfindungsgemäßen Vorrichtung 10 anzuordnende Pflanzen einzeln oder zu Einheiten zusammengefaßt, an beliebigen Stellen oberhalb der Rahmeneinrichtung 18 innerhalb der nicht dargestellten Substanz plazierbar sind. Die Wandung 17 weist einen Flansch auf, der so ausgebildet ist, daß die erfindungsgemäße Vorrichtung 10 insgesamt in einer entsprechend ausgebildeten Halteeinrichtung 20, die vorzugsweise im Erdreich angeordnet ist, abstützbar ist.

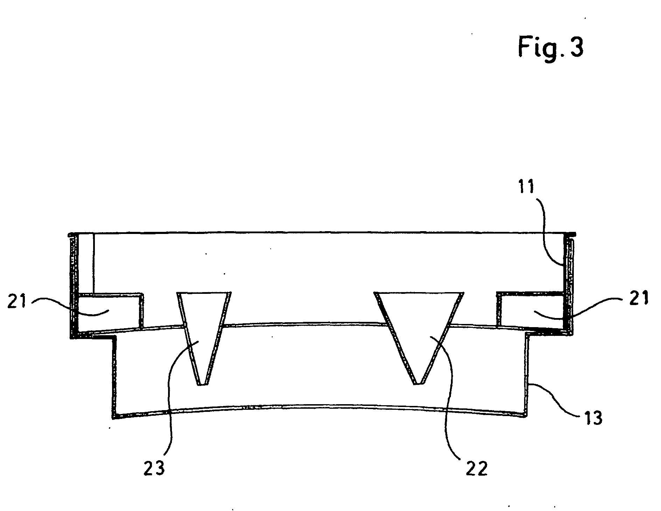

Bei der erfindungsgemäßen Vorrichtung 10 zum Anordnen von Pflanzen bewirkt eine wasserdurchlässige innere Rahmeneinrichtung 18, die als Boden des Moduls 100 ausgebildet ist, daß aufgrund von Regen oder künstlicher Bewässerung in die oberhalb der Rahmeneinrichtung 18 vorgesehene, nicht dargestellte die betreffenden Pflanzen haltende Substanz eingedrungenes überschüssiges Wasser durch die Bohrungen 19 der Rahmeneinrichtung 18 in den ein Wasserreservoir bildenden Freiraum 13 tropft und dort einen Wasservorrat bildet. Dieser Wasservorrat kann durch künstlich eingeleitetes zusätzliches Wasser vergrößert werden oder alternativ nur von künstlich eingeleitetem Wasser gebildet sein. Der in dem Freiraum 13 vorhandene Wasservorrat bildet ein Reservoir für Nährwasser für in der nicht dargestellten Substanz gehaltene Pflanzen, wobei dieses Nährwasser über aus vliesartigen Materialien gebildete Kommunikationsverbindungen, die durch Bohrungen 14 in dem Absatz 12 geführt sind, und in Wassereinleiteinrichtungen 21 münden, in die die Pflanzen haltende Substanz eingebracht wird. Des weiteren sind Vaseneinrichtungen 22, 23 für Schnittblumen in der Rahmeinrichtung 18 angeordnet sind, die eine Kommunikationsverbindung zu einem Reservoir enthalten, wie in Figur 3 dargestellt.

Die erfindungsgemäße Vorrichtung wirkt in der Weise, daß bei natürlichen Niederschlägen, wie auf der linken Seite der Figur 1 dargestellt, Regenwasser durch die das Wurzelwerk der Pflanzen haltenden Substanz 14 sickert und anschließend durch die Löcher 12' in der Unterseitenfläche 12 der Rahmeneinrichtung 11 in die Schale 15 gelangt. Wie auf der rechten Seite in Figur 1 dargestellt, bildet das angesammelte Wasser 16 insbesondere bei Schönwetter, generell jedoch auch in vermindertem Maße bei bewölktem Himmel aufgrund seines natürlichen Verdampfungsdruckes Wasserdampf 16', der durch die Unterseitenfläche 12 der Rahmeneinrichtung 11 für eine ausreichende Befeuchtung des Wurzelwerkes der in der Substanz 11 gehaltenen Pflanzen Sorge trägt.

Das oben erläuterte Ausführungsbeispiel der Erfindung dient lediglich dem Zweck eines besseren Verständnisses der durch die Ansprüche vorgegebenen erfindungsgemäßen Lehre, die als solche durch das Ausführungsbeispiel nicht eingeschränkt ist.

## Patentansprüche

1. Vorrichtung zum Anordnen von Pflanzen, mit einem Schalenelement zur Aufnahme der Pflanzen sowie einer das Wurzelwerk der Pflanzen haltenden Substanz, wobei das Schalenelement eine wasserdurchlässige innere Rahmeneinrichtung enthält, oberhalb derer die das Wurzelwerk der Pflanzen haltende Substanz vorgesehen ist, und unterhalb derer ein ein Wasserreservoir bildender Freiraum zur Aufnahme von Wasser vorgesehen ist, **dadurch gekennzeichnet, dass** eine Kommunikationsverbindung zwischen dem Reservoir und der Substanz vorgesehen ist, wobei eine oder mehr Wasserableiteinrichtung vorgesehen sind, mittels derer überschüssiges Wasser aus dem ein Wasserreservoir bildenden Freiraum ableitbar ist, und die Rahmeneinrichtung auf einem innerhalb des Schalelements ausgebildeten Absatz gelagert ist, wobei die eine oder mehr Wasserableiteinrichtung für überschüssiges Wasser aus dem ein Wasserreservoir bildenden Freiraum durch den Absatz geführt ist.

2. Vorrichtung nach Anspruch 1, **dadurch gekennzeichnet, daß** eine Kommunikationsverbindung eine oder mehr Wassereinleiteinrichtungen mit einer Öffnung zum Einleiten von Wasser in das Schalenelement enthält, die oberhalb der Rahmeneinrichtung innerhalb der das Wurzelwerk der Pflanzen haltenden Substanz angeordnet sind, und zusätzlich Einrichtungen enthält, die Wasserverbindung zwischen der einen oder mehr Wassereinleiteinrichtungen zu dem einen Reservoir und/oder einem weiteren Reservoir bewirken.

3. Vorrichtung nach Anspruch 2, **dadurch gekennzeichnet, daß** die zusätzlichen Einrichtungen durch Kapillarien gebildet sind.

4. Vorrichtung nach Anspruch 2, **dadurch gekennzeichnet, daß** die zusätzlichen Einrichtungen durch Vliesmaterialien gebildet sind.

5. Vorrichtung nach Anspruch 2, **dadurch gekennzeichnet, daß** die zusätzlichen Einrichtungen durch mindestens eine elektrische Pumpe gebildet sind.

6. Vorrichtung nach einem der vorhergehenden Ansprüche, **dadurch gekennzeichnet, daß** das eine Reservoir eine Ventileinrichtung zum Ablassen von Wasser enthält.

7. Vorrichtung nach einem der vorhergehenden Ansprüche, **dadurch gekennzeichnet, daß** die Vorrichtung aus zwei Modulen zusammengesetzt, wobei das eine Modul in das andere Modul schlüssig einsetzbar ist und in eingesetztem Zustand an einer inneren Kante des anderen Moduls abgestützt ist.

8. Vorrichtung nach einem der vorhergehenden Ansprüche, **dadurch gekennzeichnet, daß** das Schalenelement einen äußeren Flansch aufweist, mittels dessen dieses an einer Halteeinrichtung abstützbar ist.

9. Vorrichtung nach Anspruch 8, **dadurch gekennzeichnet, daß** die Halteeinrichtung im Erdreich angeordnet ist.

10. Vorrichtung nach einem der vorhergehenden Ansprüche, **dadurch gekennzeichnet, daß** die Rahmeneinrichtung einen äußeren Flansch aufweist, mittels dessen sie an dem Schalenelement abstützbar ist.

11. Vorrichtung nach einem der vorhergehenden Ansprüche, **dadurch gekennzeichnet, daß** die Wasserdurchlässigkeit der Rahmeneinrichtung durch darin ausgebildete Bohrungen erzeugt ist.

12. Vorrichtung nach einem der vorhergehenden Ansprüche, **dadurch gekennzeichnet, daß** Vaseneinrichtungen für Schnittblumen in der Rahmeinrichtung angeordnet sind, die eine Kommunikationsverbindung zu einem Reservoir enthalten.

13. Vorrichtung nach einem der vorhergehenden Ansprüche, **dadurch gekennzeichnet, daß** Aufnahmeeinrichtungen für beliebige Gestaltungselemente in der Rahmeinrichtung angeordnet sind, die eine Kommunikationsverbindung zu einem Reservoir enthalten.

## Claims

1. A device for the arrangement of plants, comprising a tray element for the accommodation of plants and a substance holding the roots of the plants, which tray element contains a water-permeable inner frame unit, above which the substance used for holding the roots of the plants is accommodated and below which a free space is provided for the accommodation of water to form a water reservoir, **characterized in that** a means of communication is provided between said reservoir and said substance, and one or more water drains are provided by means of which excess water can be drained from the free space forming the water reservoir, and the frame unit is supported on a ledge formed inside the tray element, and said one or more drains for the removal of excess water from the free space forming said water reservoir pass through said ledge.

2. A device as defined in claim 1, **characterized in that** said means of communication comprises one or more water inlet means having an opening for introducing water into said tray element, which inlet means are disposed above said frame unit within the substance holding the roots of the plants and contains additional devices that produce a water connection between said one or more water inlet means and said reservoir and/or another reservoir.

3. A device as defined in claim 2, **characterized in that** said additional devices are in the form of capillaries.

4. A device as defined in claim 2, **characterized in that** said additional devices are in the form of non-woven materials.

5. A device as defined in claim 2, **characterized in that** said additional devices are in the form of at least one electric pump.

6. A device as defined in any one of the previous claims, **characterized in that** said reservoir contains valve means for draining off the water.

7. A device as defined in any one of the previous claims, **characterized in that** said device is composed of two modules, of which one can be closely fitted into the other to be supported, when fitted in said other module, on an inner edge thereof.

8. A device as defined in any one of the previous claims, **characterized in that** said tray element exhibits an external flange by means of which it can be supported on a holding device.

9. A device as defined in claim 8, **characterized in that** said holding device is disposed in the ground.

10. A device as defined in any one of the previous claims, **characterized in that** said frame unit exhibits an external flange by means of which it can be supported on said tray element.

11. A device as defined in any one of the previous claims, **characterized in that** said frame unit is rendered permeable to water by means of bores provided therein.

12. A device as defined in any one of the previous claims, **characterized in that** vase elements for cut flowers are disposed in said frame unit and comprise means of communication with a reservoir.

13. A device as defined in any one of the previous claims, **characterized in that** accommodation means for arbitrary ornamental elements are disposed in said frame unit and comprise means of communication with a reservoir.

## Revendications

1. Dispositif récepteur pour plantes, comprenant une cuvette recevant les plantes et une substance supportant les racines des plantes, la cuvette comportant un élément cadre intérieur perméable à l'eau, au-dessus duquel est prévue la substance supportant les racines des plantes et au-dessous duquel est prévu un espace pour recevoir de l'eau
**caractérisé en ce qu'**une voie de communication est prévuee entre le réservoir et la substance, un ou plusieurs dispositifs d'evacuation d'eau étant prévus permettant d'évacuer de l'eau exédentaire de l'espace formant un réservoir d'eau, et l'élément cadre étant posé sur une épaule formée dans la cuvette, l'un ou les plusieurs dispositifs d'evacuation de l'eau exédentaire du réservoir d'eau étant placés de façon à traverser ladite épaule.

2. Dispositif selon la revendication 1,
**caractérisé en ce qu'**une voie de communication comprend un ou plusieurs dispositifs d'introduction d'eau avec une ouverture pour introduire de l'eau dans la cuvette, disposés au-dessus de l'élément cadre et à l'intérieur de la substance recevant les racines des plantes, et comprend en plus des dispositifs réalisant la communication hydraulique entre l'un ou les dispositifs d'introduction d'eau et le réservoir unique et/ou un autre réservoir.

3. Dispositif selon la revendication 2,
**caractérisé en ce qu'**une les dispositions additionnels sont constitués par des vaisseaux capillaires.

4. Dispositif selon la revendication 2,
**caractérisé en ce qu'**une les dispositions additionnels sont constitués par des nappes de fibre.

5. Dispositif selon la revendication 2,
**caractérisé en ce qu'**une les dispositions additionnels sont constitués par au moins une pompe électrique.

6. Dispositif selon l'une quelconque des revendications préalables,
**caractérisé en ce que** le réservoir unique comporte un élément valve de vidange de l'eau.

7. Dispositif selon l'une quelconque des revendications préalables,
**caractérisé en ce que** le dispositif est composé de deux modules, l'un des modules pouvant être encastré à engagement positif dans l'autre et, en état encastré, s'appuyant sur un bord intérieur de l'autre module.

8. Dispositif selon l'une quelconque des revendications préalables,
**caractérisé en ce que** la cuvette présente une collerette extérieure permettant d'appuyer celle-là sur un support.

9. Dispositif selon la revendication 8,
**caractérisé en ce que** le support est disposé en terreau.

10. Dispositif selon l'une quelconque des revendications préalables,
**caractérisé en ce que** l'élément cadre présente une collerette extérieure lui permettant de s'appuyer sur la cuvette.

11. Dispositif selon l'une quelconque des revendications préalables,
**caractérisé en ce que** l'élément cadre est rendu perméable à l'eau au moyen de forures y prévues.

12. Dispositif selon l'une quelconque des revendications préalables,
**caractérisé en ce que** des dispositifs de vase pour fleurs coupées sont disposés dans l'élément cadre, les vases étant en communication hydraulique avec un réservoir.

13. Dispositif selon l'une quelconque des revendications préalables,
**caractérisé en ce que** des dispositifs de réception pour des éléments décoratifs quelconques sont disposés dans l'élément cadre, les dispositifs de réception étant en communication hydraulique avec un réservoir.
